Europäisches Patentamt

European Patent Office

Office européen des brevets

(11) Publication number: **0 185 776 B1**

# EUROPEAN PATENT SPECIFICATION

(45) Date of publication of patent specification: **05.05.93**  (51) Int. Cl.⁵: **G05D 3/12**, G05B 19/39

(21) Application number: **85903365.6**

(22) Date of filing: **26.06.85**

(86) International application number:
**PCT/JP85/00360**

(87) International publication number:
**WO 86/00430 (16.01.86 86/02)**

(54) **APPARATUS FOR DETECTING ABSOLUTE POSITION OF SERVO CONTROL SYSTEM.**

(30) Priority: **26.06.84 JP 131745/84**

(43) Date of publication of application:
**02.07.86 Bulletin 86/27**

(45) Publication of the grant of the patent:
**05.05.93 Bulletin 93/18**

(84) Designated Contracting States:
**DE FR GB**

(56) References cited:
**GB-A- 872 470**
**JP-A- 4 863 178**
**JP-A- 5 060 682**

**Prof.Dr.-Ing.Wilhem Simon:"Die numerische Steuerung von Werkzeug-maschinen",p.42-45/85-98/101-112.**

(73) Proprietor: **FANUC LTD.**
**3580, Shibokusa Aza-Komanba, Oshino-mura**
**Minamitsuru-gun, Yamanashi 401-05(JP)**

(72) Inventor: **TOYODA, Kenichi**
**17-25, Shinmei 1-chome Hino-shi**
**Tokyo 191(JP)**
Inventor: **SAKAKIBARA, Shinsuke Mezonizumi 101**
**23-3, Higashiizumi 1-chome Komae-shi**
**Tokyo 201(JP)**

(74) Representative: **Billington, Lawrence Emlyn**
**HASELTINE LAKE & CO Hazlitt House 28**
**Southampton Buildings Chancery Lane**
**London WC2A 1AT (GB)**

## Description

This invention relates to an absolute position detecting apparatus of a servo−control system for controlling a servomotor.

Servomotors are widely utilized for highly accurate positioning of the movable element of an industrial robot or the like and are servo−controlled.

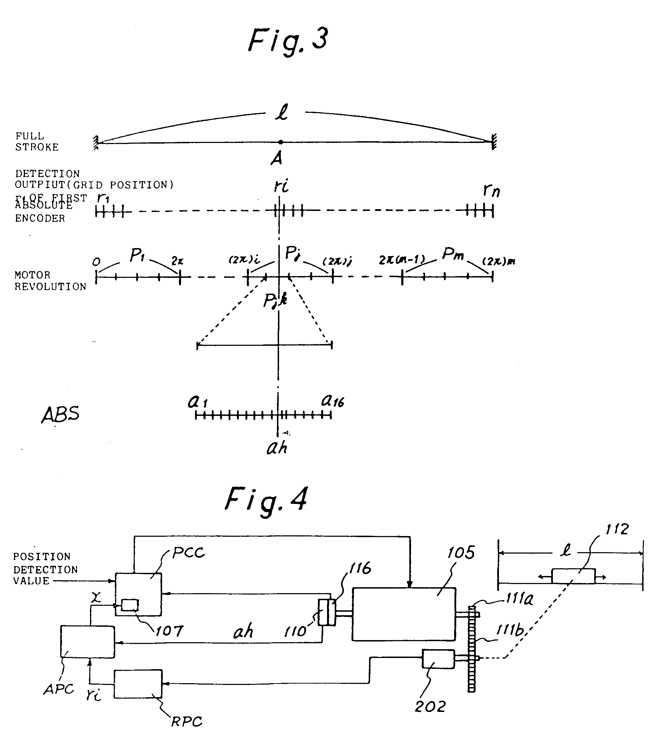

When such servo control is carried out, there are cases where the absolute position of a servo−control system is detected in order to detect position, see for example W. Simon − "Die numerische Steuerung von Werkzeugmaschinen", Carl Hanser Verlag, München, 1971, pages 85 to 98. A further arrangement of the type shown in Fig. 4 is available for detecting absolute position. In Fig. 4, numeral 110 denotes an absolute encoder which, along with a pulse coder 116, is connected directly to the rotary shaft of a servomotor 105. The absolute encoder comprises a disk the circumference whereof is provided with codes corresponding to rotational position, and optical reading means for reading the code at a specific position. The absolute encoder may be integrated with the pulse coder 116. Numerals 111a, 111b denote gears provided on the rotary shaft of the servomotor 105 and on the rotary shaft of a resolver 202, respectively, for transmitting the rotational motion of the servomotor 105 to the resolver 202. Assume that the full stroke of a movable element 112 driven by the rotation of the servomotor 105 is $\ell$, as shown in Figs. 3 and 4, and that the number of revolutions of the motor 105 needed for this stroke is Pm (the number Pm of revolutions is not limited to an integer). In such case, the gear ratio of the gears 111a, 111b is decided in such a manner that the resolver 202 makes one revolution for Pm revolutions of the motor 105. Accordingly, the resolver 202 makes one revolution for movement along the full stroke $\ell$. PCC represents a position control circuit including an error calculating and storing unit 107. RPC denotes a resolver detection circuit for outputting a grid position $r_i$ upon detecting a phase difference from the output of the resolver 202. APC represents an absolute position detecting circuit for detecting an absolute position A of the movable element 112 from the grid position $r_i$ and an output $a_h$ from the absolute encoder 110.

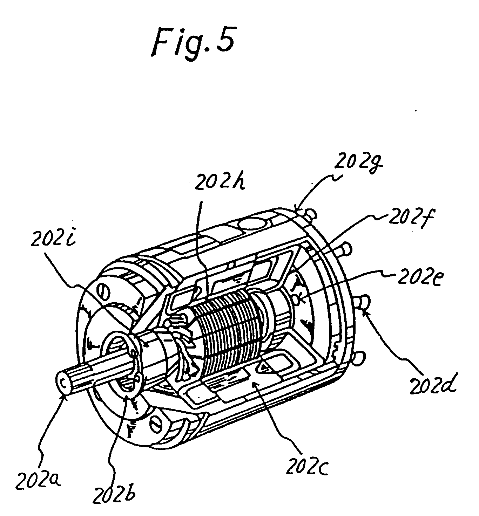

Thus, in the prior art, both an absolute encoder and a resolver are used to detect the absolute position of a servo−control system. However, a resolver is a rotary transformer having stator and rotor windings. Fig. 5 is a perspective view, partly broken away, for describing the structure of such a resolver. In the Figure, numeral 202a denotes a shaft, 202b a bearing retainer, 202c a stator, 202d a terminal, 202e a slip ring, 202f a stator retainer, 202g a case, 202h a rotor, and 202i a ball bearing.

Thus, a resolver is a mechanical detector having a complicated construction and therefore requires considerable space, is high in cost and demands both time and labor for mounting and maintenance.

An embodiment of the present invention provides an absolute position detecting apparatus of a servo−control system, which apparatus may be designed to require a compact space, to be inexpensive and advantageous in terms of mounting and maintenance.

According to the present invention there is provided an absolute position detecting apparatus of a servo−control system for detecting an absolute position of a movable element driven by a servomotor, comprising:

a first digital rotary absolute position encoder for dividing a movement of the movable element into a plurality of grid positions;

a second digital rotary absolute position encoder for detecting a position of the movable element in an interval between adjacent ones of said grid positions; and

means for detecting an absolute position of the movable element based on output signals from the first and second absolute position encoders;

characterised in that the servomotor is arranged to drive the movable element along a linear path having a predetermined stroke $\ell$, the second absolute position encoder is driven directly by the servomotor and the first absolute position encoder is driven by the servomotor through a reduction mechanism so that the first absolute position encoder rotates once for the m number of revolutions taken by the servomotor to produce a single full linear stroke $\ell$ of the movable element, whereby the angle $\alpha$ of the first absolute position encoder provides an unambiguous rough position of the linearly movable element along its stroke which, in combination with the indication produced by the second absolute position encoder, provides an accurate indication of the position of the movable element along its stroke $\ell$, since the first absolute position encoder feeds the mechanical angle $\alpha$ to a grid position generating circuit which calculates a grid position, and the second absolute encoder outputs the same number of absolute positions for each integral fraction of a full revolution of the servomotor, then the grid position is converted into a grid position of the second absolute encoder for the i−th revolution of the servomotor, the final absolute position of the linearly movable element being provided by a combination of the grid position and the detection output of the second absolute encoder.

In comparison with the conventional absolute position detecting apparatus having a resolver, an embodiment of the present invention requires less space, is inexpensive and advantageous in terms of mounting and maintenance.

Brief Description of the Drawings

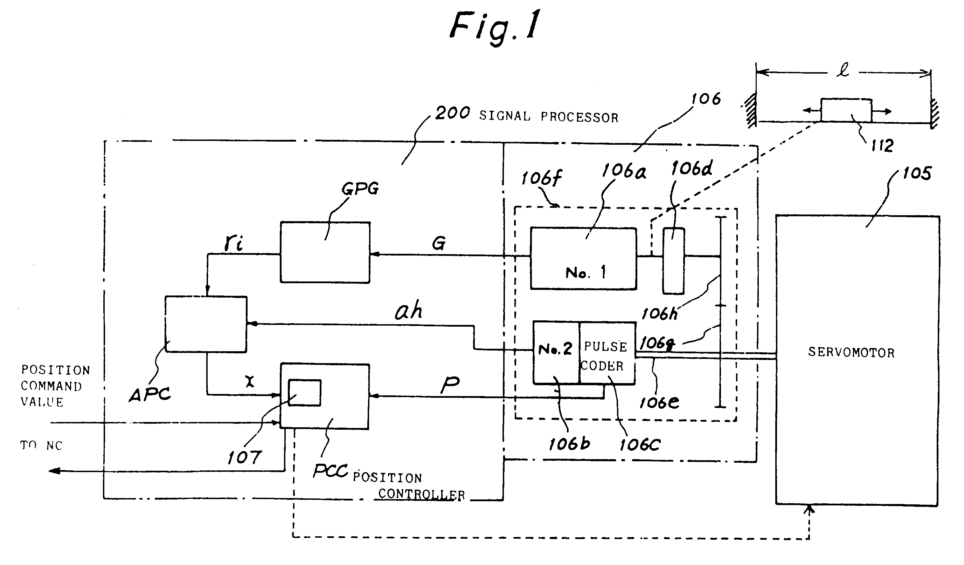

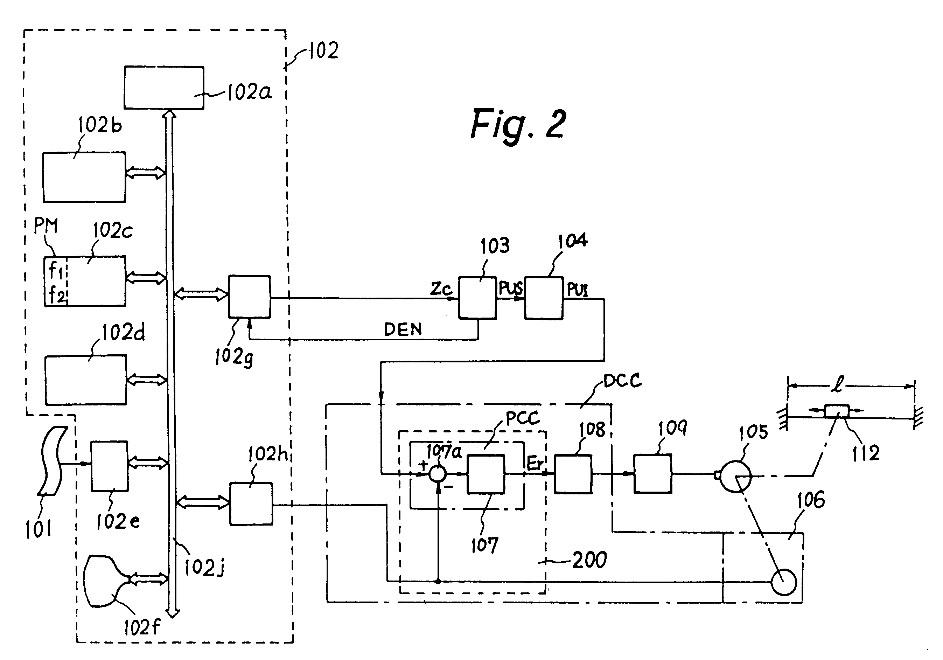

Fig. 1 is a view for describing an absolute position detecting apparatus of a servo‑control system according to the present invention, Fig. 2 is an overall block diagram illustrating a method of detecting absolute position in a servo‑control system, Fig. 3 is a view for an operational de‑scription of a servo‑control system absolute po‑sition detecting method, Fig. 4 is a view for de‑scribing a conventional absolute position detecting apparatus having a resolver, and Fig. 5 is a per‑spective view, partly broken away, for describing the structure of a resolver.

An embodiment of the present invention will now be described in detail with reference to the drawings.

Fig. 1 is an overall view of an arrangement for detecting absolute position in a servo‑control system according to the present invention. In the Figure, numeral 105 denotes the servomotor, and numeral 106 denotes an absolute position detecting apparatus comprising a first absolute (as opposed to incremental) encoder 106a, a second absolute (as opposed to incremental) encoder 106b, a pulse coder 106c, a reduction mechanism 106d, and an output shaft 106e of the servomotor 105. The first absolute encoder 106a is coupled to the rotary shaft 106e of the servomotor 105 through the re‑duction mechanism 106d and gears 106g, 106h. Numeral 200 denotes a signal processor, which includes a grid position generating circuit GPG, the absolute position detecting circuit APC, the position control circuit PCC, and the error calculating and storing unit 107. Shown at $r_i$ is a grid position signal.

The operation of this servo‑control system will now be described.

The rotational motion of the servomotor 105 is transmitted to the second absolute encoder 106b and pulse coder 106c via the output shaft 106, and to the first absolute encoder 106a via the gears 106g, 106h and reduction mechanism 106d. The first absolute encoder 106a replaces the conven‑tional resolver and is used for rough detection of absolute position. By way of example, the first absolute encoder is of 12‑bit construction and, though not shown in Fig. 1, makes one revolution for the full stroke ℓ of the movable element. A rough signal produced as an output by the first absolute encoder 106a enters the grid position generating circuit GPG, which outputs the grid po‑sition signal $r_i$. As mentioned above, the rotational motion of the output shaft 106e is also transmitted to the pulse coder 106c and second absolute en‑coder 106b. An overall block diagram of a servo‑control system shown in Fig. 2 will now be de‑scribed. In the Figure, numeral 101 denotes a paper tape in which NC command data are punched. The tape stores such NC command data as positioning information for machining, M‑, S‑ and T‑function information, and the like. Numeral 102 denotes an NC unit which causes a tape reader 102e to read the NC data from the paper tape 101, and which decodes the NC data. If an item of NC data is, e.g., an M‑, S‑ or T‑function instruction, the instruction is delivered to the ma‑chine side via a magnetics panel, not shown. If an item of NC data is a move command $Z_c$, the command is delivered to a pulse distributor 103. The NC unit 102 has a processor 102a for execut‑ing processing in accordance with a control pro‑gram, a program memory 102b for storing a pre‑determined control program, a data memory 102c for storing data, an operator's panel 102d for con‑trol, a tape reader/puncher 102e, a display device 102f, an input/output port 102g, a present position counter 102h, and an address/data bus 102j inter‑connecting these components.

Numeral 103 denotes a pulse distributor which executes a well‑shown pulse distribution calcula‑tion based on the move command Zc to generate distributed pulses PUS of a frequency corre‑sponding to a commanded velocity. Numeral 104 designates an acceleration/deceleration circuit for linearly accelerating the pulse rate of the distrib‑uted pulse train PUS when the pulse train is gen‑erated, and for linearly decelerating the pulse rate at the end of the pulse train, thereby generating a pulse train PUI. Numeral 105 denotes the ser‑vomotor, which drives an operating shaft. Numeral 106 designates the absolute position detecting apparatus for detecting the absolute position of the servo‑control system, the apparatus being pro‑vided on the output shaft of the servomotor 105 and illustrated in detail in Fig. 1. PCC represents the error calculating and storing unit which, by way of example, is constituted by a reversible counter, for storing a difference Er between a number of feedback pulses and a number of input pulses PUI generated by the acceleration/deceleration circuit 104 and indicative of a position command value. The error calculating and storing unit may be con‑stituted by an arithmetic circuit 107a for calculating the difference Er between the pulse train PUI and the feedback pulses, and the error register 107 for storing the error Er, as illustrated. Numeral 108 denotes a digital/analog (D/A) converter for gen‑erating an analog voltage proportional to the con‑tents of the error register 107, and 109 designates a velocity control circuit. The error calculating and storing unit PCC and the D/A converter 108 con‑

struct a motor position control circuit DCC.

Fig. 3 is a view for describing the operation of the arrangement shown in Fig. 2. As shown in Fig. 3, let $\ell$ represent the full stroke of the movable element along the operating shaft driven by the rotation of the servomotor 105, and let m represent the number of revolutions required to be made by the servomotor 105 to traverse this stroke (where the number m of revolutions is not limited to an integer). In such case, the reduction mechanism 106d performs a speed reduction so that the first absolute encoder 106a will make one revolution for m revolutions of the servomotor 105. Accordingly, the first absolute encoder revolves once for movement equivalent to one full stroke. In Fig. 1, PCC denotes the position control circuit comprising the error calculating and storing unit 107, etc., shown in Fig. 2. The position control circuit receives pulses P produced by the pulse coder 106c and is supplied with the output of the absolute position detecting circuit APC. The position control circuit performs position control based on these signals. APC represents the absolute position detecting circuit, which detects absolute position x from the grid position signal $r_i$ and the output $a_h$ of the second absolute encoder 106b.

The operation of the servo-control system will be described in further detail with reference to Figs. 1 through 3.

When the status of the present position counter 102h and the actual present position of the movable element 112 no longer coincide due to an error in the servo-control system (i.e., when the present position is lost), a grid position $r_i$ is obtained on the basis of the output from the first absolute encoder 106a.

More specifically, the grid position generating circuit GPG obtains a mechanical angle $\alpha$ from the output of the first absolute encoder 106a and calculates the grid position $r_i$. Since the first absolute encoder 106a makes one revolution for m revolutions of the servomotor 105 (which corresponds to movement equivalent to the full stroke $\ell$), as mentioned above, the mechanical angle $\alpha$ corresponds to the position of point A. Letting n represent the resolution of the first absolute encoder 106a, we have

$$r_i = i \cdot \ell/n$$

This is converted into the grid position of the first absolute encoder 106a.

Meanwhile, the second absolute encoder 106b divides one fourth of a revolution into 16 equal parts every quarter revolution of the servomotor 105 and outputs absolute positions $a_1 - a_{16}$ corresponding thereto. Accordingly, the absolute positions $a_1 - a_{16}$ are produced four times for each single revolution of the servomotor 105. The grid position $r_i$ is converted into the grid position $P_{jk}$ of the second absolute encoder 106b for the i−th revolution of the servomotor 105. This can be found with facility since the resolution n and number m of revolutions of the servomotor 105 are already known. Specifically, for the width of the grid position $P_{jk}$ of the second absolute encoder 106b, the grid position $r_i$ of the first absolute encoder 106a corresponds to n/4m. Therefore, the i−th grid position $r_i$ of the first absolute encoder 106a corresponds to the $i \cdot 4m/n$−th grid position $P_{jk}$ of the second absolute encoder 106b.

When the grid position $P_{jk}$ is thus obtained and the detection output $a_h$ of the second absolute encoder 106b is read and combined therewith, the detecting circuit APC obtains the absolute position of point A. It should be noted that the second absolute encoder 106 is composed of, e.g., four bits to enable highly precise detection of position. The absolute position detecting apparatus may be accommodated in compact fashion within a case 106f, as indicated by the dashed line in Fig. 1.

In the embodiment described, the control system has one drive shaft. It goes without saying, however, that the invention can also be applied to a control system having a plurality of drive shafts.

The present invention is applicable to an absolute position detecting apparatus of a servo-control system having a numerical control unit for controlling the movable element of a robot or the movable element of a machine tool such as a lathe.

## Claims

1. An absolute position detecting apparatus of a servo-control system for detecting an absolute position of a movable element (112) driven by a servomotor (105), comprising:

   a first digital rotary absolute position encoder (106a) for dividing a movement of the movable element (112) into a plurality of grid positions (rn);

   a second digital rotary absolute position encoder (106b) for detecting a position of the movable element (112) in an interval between adjacent ones of said grid positions(rn); and

   means (APC) for detecting an absolute position of the movable element (112) based on output signals from the first and second absolute position encoders (106a, 106b);

   characterised in that the servomotor (105) is arranged to drive the movable element (112) along a linear path having a predetermined stroke $\ell$, the second absolute position encoder (106b) is driven directly by the servomotor (105) and the first absolute position encoder (106a) is driven by the servomotor (105) through a reduction mechanism (106d) so that the first absolute position encoder (106a) rotates once for the m number of revolutions taken by the servomotor (105) to produce a single full linear stroke ℓ of the movable element (112), whereby the angle $\alpha$ of the first absolute position encoder (106a) provides an unambiguous rough position of the linearly movable element (112) along its stroke which, in combination with the indication produced by the second absolute position encoder (106b), provides an accurate indication of the position of the movable element (112) along its stroke ℓ, since the first absolute position encoder (106a) feeds the mechanical angle $\alpha$ to a grid position generating circuit (CPG) which calculates a grid position ($r_i$), and the second absolute encoder (106b) outputs the same number (16) of absolute positions for each integral fraction (1/4) of a full revolution of the servomotor (105), then the grid position ($r_i$) is converted into a grid position ($P_{jk}$) of the second absolute encoder (106b) for the i-th revolution of the servomotor (105), the final absolute position of the linearly movable element (112) being provided by a combination of the grid position ($P_{jk}$) and the detection output ($a_h$) of the second absolute encoder (106b).

2. An absolute position detecting apparatus of a servo-control system according to claim (1), characterized in that the first absolute encoder (106a) is of 12-bit construction.

3. An absolute position detecting apparatus of a servo-control system according to claim 1 or 2, characterized in that the second absolute encoder (106b) is of 4-bit construction.

4. An absolute position detecting apparatus of a servo-control system according to any preceding claim, characterized by having a pulse coder (106c) which rotates together with the second absolute encoder (106b) to provide feedback pulses (P) for an external position controller (PCC).

5. An absolute position detecting apparatus of a servo-control system according to any preceding claim, characterized in that at least the first and second absolute encoders (106a,106b) and the reduction mechanism (106d) are accommodated in the same case.

**Patentansprüche**

1. Vorrichtung zur Feststellung einer absoluten Position eines Servoregelsystems zur Feststellung einer absoluten Position eines durch einen Servomotor (105) angetriebenen bewegbaren Elements (112) mit

einem ersten absoluten digitalen Decoder (106a) der Rotationsstellung zum Aufteilen einer Bewegung des bewegbaren Elements (112) in eine vielzahl von Rasterstellungen (rn),

einem zweiten absoluten digitalen Decoder (106b) der Rotationsstellung zum Feststellen einer Position des bewegbaren Elements (112) in einem Zwischenraum zwischen jeweils zwei benachbarten der genannten Rasterstellungen (rn), und

Mittel (APC) zur Feststellung einer absoluten Position des bewegbaren Elements (112) auf der Grundlage von Ausgangssignalen der ersten und zweiten absoluten Stellungsdecoder (106a, 106b),

dadurch gekennzeichnet, daß der Servomotor (105) eingerichtet ist, das bewegbare Element (112) entlang einer geradlinigen Bahn mit einem vorgegebenen Hub 1 anzutreiben, wobei der zweite absolute Stellungsdecoder (106b) direkt durch den Servomotor (105) angetrieben wird, und der erste absolute Stellungsdecoder (106a) durch den Servomotor (105) über einen Untersetzungsmechanismus (106d) angetrieben wird, so daß der erste absolute Stellungsdecoder (106a) sich nur einmal pro Anzahl m von Umdrehungen dreht, die von dem Servomotor (105) ausgeführt werden, um einen einzelnen vollständigen geradlinigen Hub 1 des bewegbaren Elements (112) zu erzeugen, wobei der Winkel $\alpha$ des ersten absoluten Stellungsdecoders (106a) eine unzweideutige grobe Position des geradlinig bewegbaren Elements (112) entlang seines Hubes zur Verfügung stellt, welcher in Kombination mit der durch den zweiten absoluten Stellungsdecoder (106b) erzeugten Anzeige eine genaue Anzeige der Position des bewegbaren Elements (112) entlang seines Hubs 1 liefert, da der erste absolute Stellungsdecoder (106a) den mechanischen Winkel $\alpha$ einer eine Rasterstellung erzeugenden Schaltung (CPG) zuführt, welche eine Rasterstellung ($r_i$) berechnet, und daß der zweite absolute Stellungsdecoder (106b) die gleiche Anzahl (16) von absoluten Stellungen für jeden ganzen Bruchteil (1/4) einer vollständigen Umdrehung des Servomotors (105) ausgibt, daß dann die Rasterstellung ($r_i$) in eine Rasterstellung ($P_{jk}$) des zweiten absoluten Decoders (106b) für die i-te Umdrehung des Servomotors (105) umgewandelt wird, wobei die endgültige absolute Position des geradlinig bewegbaren Elements (112) als eine Kombination der Rasterstellung

(P$_{jk}$) und des Feststellungsausgangssignals (a$_h$) des zweiten absoluten Stellungsdecoders (106b) bereitgestellt wird.

2. Vorrichtung zur Feststellung einer absoluten Position eines Servoregelsystems nach Anspruch 1, dadurch gekennzeichnet, daß der erste absolute Decoder (106a) einen 12 − bit − Aufbau aufweist.

3. Vorrichtung zur Feststellung einer absoluten Position eines Servoregelsystems nach Anspruch 1 oder 2, dadurch gekennzeichnet, daß der zweite absolute Decoder (106b) einen 4 − bit − Aufbau aufweist.

4. Vorrichtung zur Feststellung einer absoluten Position eines Servoregelsystems nach einem der vorhergehenden Ansprüche, gekennzeichnet durch einen Impulscodierer (106c), welcher sich zusammmen mit dem zweiten absoluten Decoder (106b) dreht, um Rückführungsimpulse (P) für einen externen Positionscontroller (PCC) zu liefern.

5. Vorrichtung zur Feststellung einer absoluten Position eines Servoregelsystems nach einem der vorhergehenden Ansprüche, dadurch gekennzeichnet, daß mindestens der erste und zweite absolute Decoder (106a, 106b) und die Untersetzungsvorrichtung (106c) im gleichen Gehäuse untergebracht sind.

**Revendications**

1. Un appareil de détection de la position absolue d'un système de servocommande pour détecter une position absolue d'un élément mobile (112) entraîné par un servomoteur (105), comprenant :
   un premier codeur rotatif numérique de position absolue (106a) pour diviser un mouvement de l'élément mobile (112) en un ensemble de positions de grille (rn) :
   un second codeur rotatif numérique de position absolue (106b) pour détecter une position de l'élément mobile (112) dans un intervalle entre des positions de grille adjacentes parmi lesdites positions de grille (rn) ; et
   des moyens (APC) pour détecter une position absolue de l'élément mobile (112) sur la base de signaux de sortie provenant des premier et second codeurs de position absolue (106a, 106b) ;
   caractérisé en ce que le servomoteur (105) est prévu pour entraîner l'élément mobile (112) le long d'un trajet linéaire présentant une course ℓ déterminée à l'avance, le second codeur de position absolue (106b) est entraîné directement par le servomoteur (105) et le premier codeur de position absolue (106a) est entraîné par le servomoteur (105) par l'intermédiaire d'un mécanisme de réduction (106d) de sorte que le premier codeur de position absolue (106a) tourne une fois pendant le nombre m de tours effectué par le servomoteur (105) pour produire une seule course linéaire complète ℓ de l'élément mobile (112), de sorte que l'angle α du premier codeur de position absolue (106a) fournit une position clairement approchée de l'élément mobile linéairement (112) le long de sa course qui, en combinaison avec l'indication produite par le second codeur de position absolue (106b), fournit une indication précise de la position de l'élément mobile (112) le long de sa course ℓ, du fait que le premier codeur de position absolue (106a) applique l'angle mécanique α à un circuit générateur de positions de grille (CPG) qui calcule une position de grille (r$_i$), et le second codeur absolu (106b) donne en sortie le même nombre (16) de positions absolues pour chaque fraction entière (1/4) d'un tour complet du servomoteur (105), puis la position de grille (r$_i$) est convertie en une position de grille (P$_{jk}$) du second codeur absolu (106b) pour le i − ème tour du servomoteur (105), la position absolue finale de l'élément mobile linéairement (112) étant assurée par une combinaison de la position de grille (P$_{jk}$) et de la sortie de détection (a$_h$) du second codeur absolu (106b).

2. Un appareil de détection de la position absolue d'un système de servocommande selon la revendication (1), caractérisé en ce que le premier codeur absolu (106a) présente une construction à 12 bits.

3. Un appareil de détection de la position absolue d'un système de servocommande selon la revendication 1 ou 2, caractérisé en ce que le second codeur absolu (106b) présente une construction à 4 bits.

4. Un appareil de détection de la position absolue d'un système de servocommande selon une revendication précédente quelconque, caractérisé en ce qu'il présente un codeur d'impulsions (106c) qui tourne en même temps que le second codeur absolu (106b) pour fournir des impulsions de contre − réaction (P) pour un organe de commande de position externe (PCC).

5. Un appareil de détection de la position absolue d'un système de servocommande selon une revendication précédente quelconque, caractérisé en ce qu'au moins les premier et second codeurs absolus (106a, 106b) et le mécanisme de réduction (106d) sont placés dans le même boîtier.

# Fig.1

EP 0 185 776 B1

Fig. 2

EP 0 185 776 B1

EP 0 185 776 B1

Fig.3

Fig.4

10

Fig.5

202h
202g
202f
202i
202e
202d
202a
202b
202c